# EUROPEAN PATENT SPECIFICATION

(11) **EP 1 361 412 B1**
(45) Date of publication and mention of the grant of the patent: **06.08.2008**
(21) Application number: 03010474.9
(22) Date of filing: 09.05.2003
(51) Int. Cl.: G01B 5/255, G01B 7/315, G01B 11/275, G01B 21/26

(54) **Quick-fit assembly for measuring and centering jigs used for vehicle wheel trim**
Schnellmontageaufbau für Mess- und Zentrierungsvorrichtungen zur Radeinstellung
Dispositif d'attache rapide pour des gabarits de mesure et centrage utilisé dans l'ajustage des roues

(30) Priority: 09.05.2002 IT MO20020114
(43) Date of publication of application: 12.11.2003
(73) Proprietor: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Feltrinelli, Secondo Andrea

(56) References cited:
- US-A- 3 423 839
- US-A- 4 854 702
- US-A- 5 987 761
- PATENT ABSTRACTS OF JAPAN vol. 017, no. 045 (P-1476), 28 January 1993 (1993-01-28) -& JP 04 258701 A (TOYOTA MOTOR CORP), 14 September 1992 (1992-09-14)

## Description

### Technical field

This invention relates to quick-fit units for measuring and centering jigs for vehicle wheel trim.

### Background art

Devices which can provide a stable and correctly oriented support for jigs used to measure and adjust the wheel trim of vehicles, in particular motor vehicles, have been known and used by operators in the industry for a long time.

These known devices essentially comprise, for each wheel, a substantially circular flange provided with openings of predetermined shape to engage the attachment members with which the said devices are provided.

These flanges are also fitted with jaws which can engage the outer edges of the rims to become a single body with the same. A vehicle wheel alignment apparatus and method of use are known from US 4,854,702 according to which the apparatus has active light beam projecting instruments mounted on the front wheels to project beams longitudinally and transversely between the wheels of a vehicle, passive wheel position instruments on the wheels for reflecting incident beams to the active instruments, a system of mirrors associated with the active and passive instruments and beam targets for utilizing the system of mirrors and targets to find alignment information, and alignment data indicators responsive to the manipulation of the active instruments and responses from the passive instruments for visually revealing the alignment data and aiding and adjusting the wheels to specified alignment values.

A second embodiment of these known devices provides that the flanges are provided with jaws which engage directly on the tyres, while support for the wheel is entrusted to a number of pins which extend perpendicularly from the flanges, directed towards the interior of the wheels, so that they rest against the brake discs and are held in contact with the same through the action of the jaws on the tyres. An axle measurement holder to fasten a measuring head to the rim of a vehicle wheel of this kind is know from US 5,987,761.

This axle measurement holder device includes a base body for direct or indirect stable contact with a rim of a vehicle wheel. Two arms arranged diametrically opposed feature respective hooks at their ends that are directed radially outwards to hook into a tread of a tyre. The ends of the arms directed radially outward the inside are attached by means of a pivot bearing to the end of a one armed lever, the end which is directed away from the base body, the outer end of which is connected to the base body via an articulation and tension springs. The one armed levers can be tensed radially inward by means of clamping devices. The one armed levers are each preloaded radially toward the outside by centring springs which exert the same forces and have the same characteristics and which are supported at a central point of the base body. The centring springs hold the arms and thereby the hooks located at their ends in any tensed position at the same radial distance to the axle that is defined by the axle shaft. This simplifies the attachment and clamping of the axle measurement holder device.

A further installation device of gauge for wheel alignment is known from JP 04258701.

This installation device comprises two sockets into which a nut can be inserted, link which supports the socket in shiftable manner and a case which supports the link in swingable manner. An operating member which has an operation part which can contact with the link is shiftable in the axis line direction of a case, and an installation member having the installation part of a gage shifts the operating member. An adjusting member having a tilt adjusting plate is supported in shiftable manner in the axis line direction of the case. the socket is shifted towards the radius of a wheel by the force applied from the operating member through the link.

Support on the wheels is a feature of fundamental importance for first detecting and then suitably and perfectly adjusting trim.

This makes it necessary to have as a reference support a surface or a number of points free from the irregularities which, if present, would otherwise be passed onto the results of the jig readings, giving rise to incorrect adjustment of the wheel trims.

This problem is of particular importance for sports cars and in particular fast cars in which incorrect trim can be a source of risk when running on the road and, above all, on motorways where appreciable speeds are reached.

Known devices involve a number of disadvantages in this respect.

A first disadvantage, associated essentially with devices provided with supports on the edges of the rims lies in the fact that in daily use the latter are subjected to impacts of variable strength against obstacles of all kinds such as pavements, holes, stones and so on.

These impacts deform the circumference of the rims, so that any reference taken from these will be unreliable from the point of view of accuracy.

As far as devices equipped with jaws which directly engage the running surfaces of the tyres are concerned, it can happen that these are very broad, especially in the sports cars and fast cars already mentioned, as a result of which it becomes extremely difficult to grip them in such a way as to achieve correct and stable positioning of the flange intended to support the measuring jigs.

In both cases there is specifically a risk that measurements and adjustments will be made which are incorrect, if not even useless.

Another problem lies in the fact that when the support devices are fitted, in particular to light alloy rims, which are well-known to be delicate and expensive, maximum care has to be taken to avoid any damage to them.

### Disclosure of the invention

The main object of this invention is to overcome the abovementioned disadvantages of the known art by providing a quick-fit unit for measuring and centering jigs for vehicles' wheel trim which can be used on wheels of a special type, especially those fitted to fast cars and sports cars, which also makes it possible to have a secure and proper support without distortions so as to permit error-free measurement and adjustment.

A particular object of this invention is to provide proper and secure attachment for measuring and centering jigs without the hazard of damaging rims in any way.

These objects, and others which will be more clearly understood below, are achieved through this quick-fit unit for measuring and centering jigs for vehicles' wheel trim characterised in that it comprises at least one flange provided with means for attaching and supporting jigs, a central member integral with the said flange having an axis at right angles thereto and provided with expandable means for coupling and securing to the central hole of a wheel, means for operating the said expansion means, support and reference members for the said flange on a wheel.

### Brief description of the drawings

Further features and advantages of the invention will be more clearly understood from the detailed description of a preferred but not exclusive embodiments of a quick-fit unit for measuring and centering jigs for vehicles' wheel trim, illustrated by way of a non-limiting example with the aid of the accompanying drawings in which:
**FIG. 1** is a view in cross-section of a first embodiment of a quick-fit unit for measuring and centering jigs for vehicle wheel trim according to this invention,
**FIG. 2** is a view in cross-section of a second embodiment of a quick-fit unit for measuring and centering jigs for vehicle wheel trim according to this invention,
**FIG. 3** is a perspective view of a quick-fit unit for measuring and centering jigs for vehicle wheel trim according to this invention, fitted to the wheel of a car.

### Detailed description of some preferred embodiments

With particular reference to the figures, 1 indicates as a whole a quick-fit unit for measuring and centering jigs for the trim of a vehicle wheel 2.

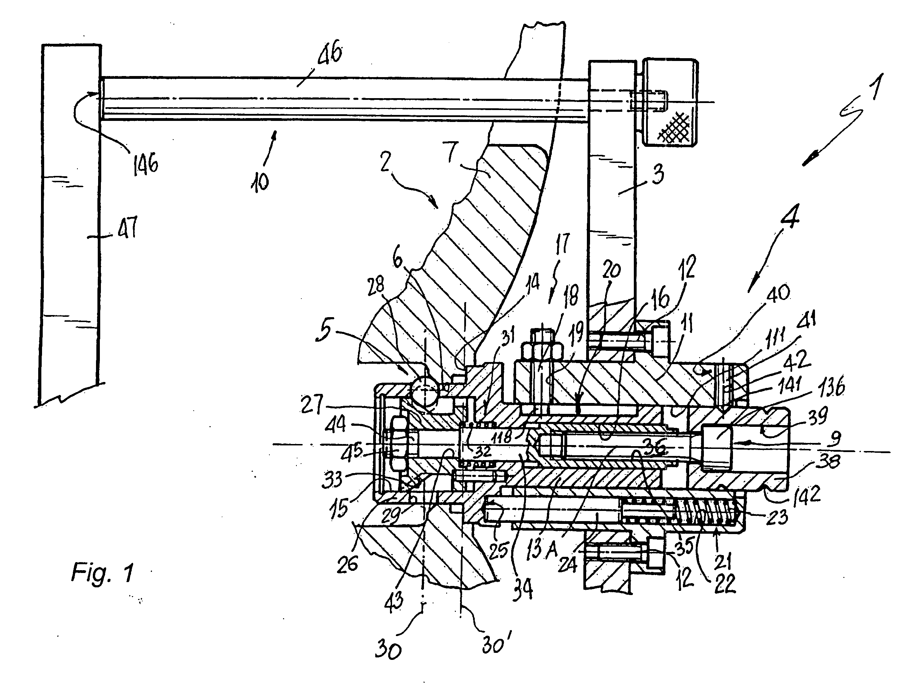

In the first possible embodiment illustrated in Figure 1, unit 1 essentially comprises a flange 3 which is provided with jig attachment and supporting means, which are not illustrated and described in detail because they are of a known type and have no effect on this invention.

A central member 4 having a longitudinal axis A at right angles to flange 3 is connected to flange 3. Member 4 is provided with expansion means 5 for connection and securing to central hole 6 of wheel 2, or more specifically rim 7 which is a component of it together with tyre 8.

Expansion means 5 can be operated from the outside by means of a control member 9 and members 10 for support and reference with respect to wheel 2 are also secured to flange 3.

Central member 4 comprises a first outer cylindrical body 11, referred to in brief below as first body 11, which is shaped substantially in the form of a sleeve and which can be secured to flange 3 by corresponding securing means, for example, as illustrated in Figure 1, by corresponding stud bolts 12.

First body 11 has an axial cavity 111 in which a second body 13, also substantially cylindrical and in the shape of a sleeve, is fitted so as to move coaxially.

The second sleeve has an expanded end facing wheel 2 forming a peripheral surface 14 for support, bearing against the peripheral edge of central hole 6, and a seat 15 for housing expansion means 5.

The opposite end of second body 13 has a hollow coaxial seat 16 for movably housing control member 9.

Between first body 11 and second body 13 guide means 17 are provided to guide movement between the two which essentially comprise at least one through key 18 which can be screwed into a corresponding threaded hole 19 made transversely in first body 11 and a corresponding longitudinal groove 20 with blind ends made on the outer surface of second body 13 in which the tip 118 of key 18 is accurately engaged.

Between first body 11 and second body 13 there are also elastic means 21 opposing mutual movement which comprise a hollow seat 22 with a blind end provided in a perimetral zone of first body 11 with an axis parallel to longitudinal axis A, and a helicoidal compression spring 23 housed in hollow seat 22. A guide pin 24, inserted so as to move coaxially in hollow seat 22 and with its ends located between said helicoidal spring 23 and a supporting stop 25 made in second body 13, is also provided.

Seat 15 housing expansion means 5 comprises a cup member 26 which extends coaxially from the corresponding end of second body 13.

Expansion means 5, in the first embodiment of the invention, comprises a conical or frustoconical expander member 27 which is mounted so as to move within cup 26 coaxially therewith and is secured to control member 9 as specified below, with the taper facing flange 3.

Expansion member 27 acts on a plurality of small balls 28 which are included between the outer surface of the same and the inner walls of cup 26 and which can project from (or retract into) a plurality of substantially circular through holes 29 which are made in the periphery of the side wall of cup member 26.

Through holes 29 have diameters which are slightly less than the diameters of small balls 28 so as to permit only the keyed portions to pass, to extend beyond the outer surface of cup 26. All through holes 29 lie in a first common plane 30 which is at right angles to longitudinal axis A and parallel to a second plane 30' in which perimetral supporting surface 14 bears against the peripheral edge of central hole 6. The distance between first plane 30 and second plane 30' can be adjusted using control member 9.

Elastic compression means 31, comprising at least one helicoidal spring 32, are also placed between expander member 27 and the bottom of cup 26.

The outer surface of expander member 27 has a number of radial grooves 33 to guide the movement of balls 28.

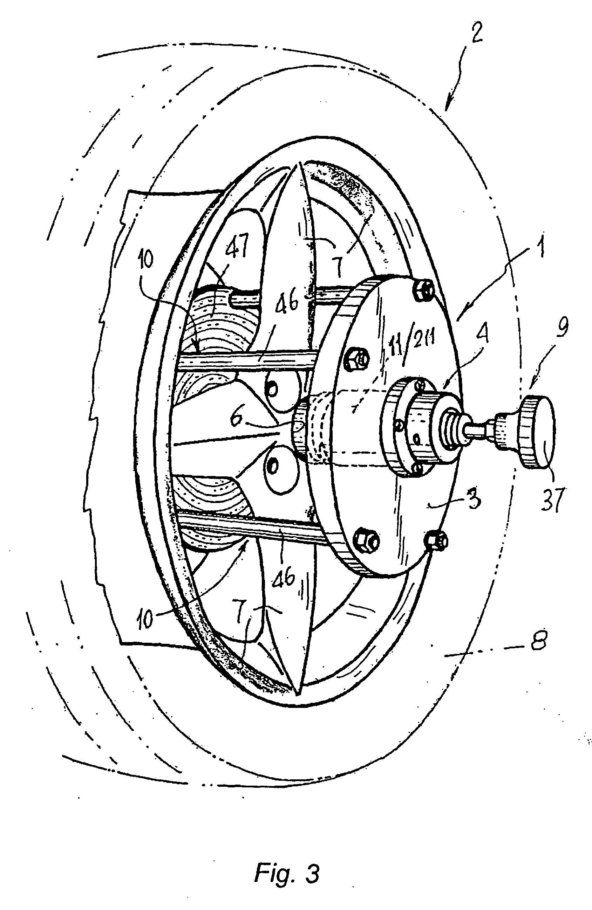

Control member 9 of expander member 27 essentially comprises a rod 34 which is inserted to move coaxially within hollow seat 16, a threaded cavity 35 made coaxially with rod 34 at the end of the same facing wheel 2 and a threaded bolt 36 which engages threaded cavity 35. Bolt 36 has an outer head 136 through it can be engaged by control tools in two-directional rotation, in fact a dynamometric wrench 37, which can be seen in Figure 3.

Axial cavity 111 is provided with a closing cap 38 at the end of first body 11, the opposite end of which faces wheel 2. Cap 38 is passed through by a cavity 39 for the passage of head 136 in such a way as to form a supporting shoulder for the same. The opposite end of rod 34 facing wheel 2 can be firmly secured to thrust member 27 by securing means 39.

Cap 38 can be immobilised against the end of axial cavity 111 through corresponding engaging means 40 which may comprise at least one threaded pin 41 which can be screwed into a matchingly threaded through hole 42 made transversely in first outer body 11 and of which inner end 141 can be engaged in a corresponding groove 142 made peripherally in cap 38.

Means 39 securing rod 34 to thrust member 27 comprise a through cavity 43 made axially in member 27, a threaded shank 44 extending from the end of rod 34 and passing through through hole 43 and a nut 45 which can be screwed onto threaded shank 44.

The supporting and adjustment members 10 for flange 3 comprise a plurality of rods 46 of identical length and of one piece with flange 3.

Rods 46, which are normally four in number, extend at right angles from the surface of flange 3 facing wheel 2 to bear with their corresponding tips 146, which are coplanar with each other, in the configuration in which each central member 4 is coupled and secured to the corresponding central holes 6 of wheels 2 against discs 47 of the brake units with which a vehicle is provided.

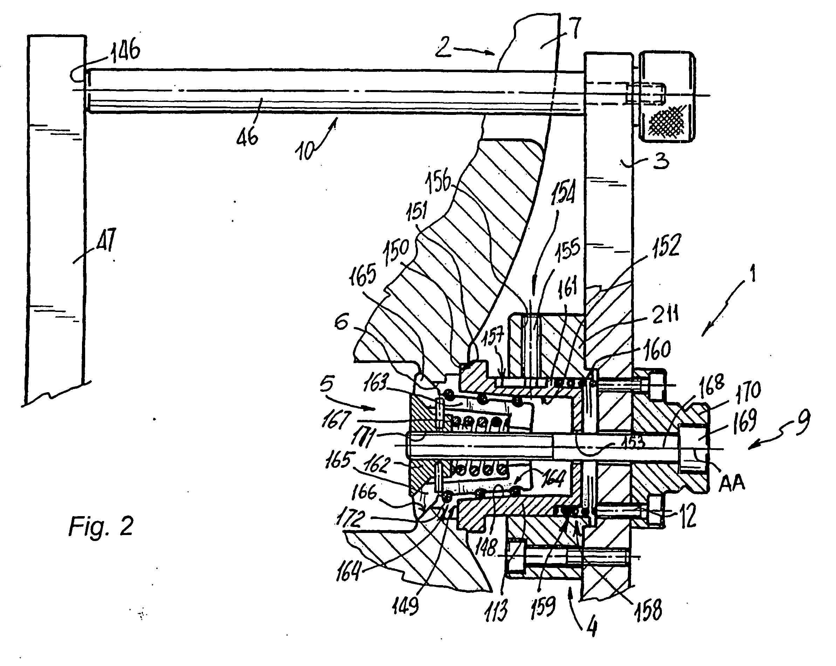

In a second possible embodiment of unit 1 according to this invention and illustrated in Figure 2, central member 4 also comprises a first outer cylindrical body 211 which is substantially in the shape of a sleeve and which can be secured to flange 3 by corresponding securing means, preferably a set of stud bolts 12.

Within first body 211, in its axial cavity 148, there is mounted, in a way which can move coaxially, a second inner body 113 substantially in the shape of a cup and having an access opening 149 facing wheel 2 defining an annular edge 150 as a support bearing against the opposite peripheral edge 151 of central hole 6 of rim 7 of wheel 2.

Within second cup-shaped body 113 there is a seat 152 to house expansion means 5, the base of which is provided with a central hole 153 to permit the passage of control pin 9.

Between first outer cylindrical body 211 and second inner cup-shaped body 113 are means 154 to guide the movement of the latter within said first member 211.

Guide means 154 essentially comprise a through key 155 which can be screwed into a corresponding threaded hole 156 made transversely in first outer cylindrical body 211, a corresponding longitudinal groove 157 with blind ends made in the outer surface of second inner cup-shaped body 113 and in which the tip of key 155 can move with precise engagement.

Again in the second embodiment of unit 1, between first cylindrical outer body 211 and second inner body 113 there are elastic means 158 which oppose the mutual movement. These elastic means comprise a hollow seat 159 made in first outer cylindrical body 211 with an axis parallel to longitudinal axis "AA" thereof and a supporting end comprising said flange 3, at least one helicoidal compression spring 160 housed in said hollow seat 159 and a perimetral shoulder 161 which extends from the outer surface of said inner cup-shaped body 113 which acts as a stop for helicoidal spring 160.

In this embodiment expansion means 5 also comprise an expander member 162 which is mounted so as to move within second inner cup-shaped body 113 coaxially therewith and secured to control means 9. The taper of expander member 162 faces flange 3.

Expansion means 5 also comprises at least one pair of facing half-shells 163 which can be moved apart by the progressive insertion of expander member 162 between them against the force of peripheral elastic containment means 164 and a perimetral edge 165 projecting outward from the ends of half-shells 163 facing central hole 6 of wheel 2. This perimetral edge 165 can be attached to an opposite inner edge 166 of central hole 6 when half-shells 163 are in a parted configuration.

Finally, elastic opposing means 167 which are located between half-shells 163 and conical/frustoconical member 162 are provided in means 5.

Control means 9 in this case again comprises a bolt 168 which can be introduced coaxially to pass through flange 3 and central opening 153 passing between half-shells 163 and having a head 169 bearing, preferably through an intermediate block 170, against a surface opposite flange 3 with respect to wheel 2 and the opposite threaded end facing expander member 162 which can be engaged in a matching threaded seat 171 provided coaxially therein.

Peripheral elastic opposing and containment means 164 comprise a number of elastic annular members 172 fitted peripherally on half-shells 163 in corresponding annular grooves made therein.

Operation of the quick-fit unit for measuring and centering jigs for vehicle wheel trim according to the invention is described below for a single wheel 2 because it is identical for all the wheels of a vehicle.

In the case of the first embodiment, the operator responsible for checking the trim offers up quick-fit unit 1 and abuts perimetral surface 14 of second body 13 against the perimetral edge of central hole 6 of wheel 2.

To complete this abutment, support bolt 36 is first unscrewed from the exterior, for example using a dynamometric wrench 37 which can be engaged with head 136 of aforesaid bolt 36. In this way rod 34, pushed by the relaxation of spring 32, moves in hollow seat 16 of second body 13 in the direction of central hole 6 of wheel 2.

This movement causes balls 26 guided by radial grooves 33 to withdraw within seat 15; in this configuration the plane 30 of through holes 29 can pass beyond the inner edge of central hole 6.

The operator then proceeds to further screw up bolt 36 in order to pull back pin 34 and with it expander member 27 in a direction opposite to the previous one. Because balls 28 have to move radially in grooves 33 on its own perimetral surface in an outward direction until they project from corresponding through holes 29, they engage the inner edge of central hole 6 of wheel 2 and thus prevent unit 1 from being detached from it.

The operator continues to screw up bolt 36 whose head 136 bears against cap 38 which is immobilised on first body 11 through key 41. This screwing causes first body 11 to move onto second body 13 and progressively bring flange 3 closer to rim 7 of wheel 2 until the tips of rods 46 placed between the spokes of rim 7 are supported against disc 47 of the vehicle's braking unit.

When said first body 11 moves onto second body 13, spring 23 fitted on guide pin 24 within hollow seat 22 is compressed.

Screwing continues until dynamometric wrench 37 turns freely, having reached the maximum torsional load applicable. In this configuration flange 3 bears firmly against disc 47 of the vehicle's braking unit and is held in that position as a result of central member 4 engaging central hole 6 in wheel 2.

The operator can then fit the trim measuring and centering jig for wheel 2 on flange 3 using aforesaid disc 47, whose position is constantly stable on the vehicle, as a reference.

By acting in the reverse way to what has been described above the operator can remove unit 1 from wheel 2 once the work has been done.

In the second possible version of unit 1, its operation is substantially similar to the above.

The substantial difference in comparison with the version previously described lies in the fact that the inner edge 166 of central hole 6 of wheel 2 is engaged by the two half-shells 163, or, more specifically, their projecting perimetral edges 165.

In detail, half-shells 163 are normally held close together by elastic annular members 172 located peripherally in the corresponding annular grooves made therein. When bolt 168 is screwed up, possibly using a dynamometric wrench 37 engaged on head 169 of said bolt 168, conical/frustoconical expander member 162 which engages between half-shells 163 is moved back towards flange 3 progressively separating them, overcoming the force of elastic annular members 172.

This expansion continues until perimetral edges 165 bear against inner edge 166.

Continuing the screwing motion, first body 211 moves over second body 159 against spring 160, loading it under compression, and its relaxation will assist the operation of disengaging and removing unit 1.

The movement of said first body 211 carries with it flange 3 to which it is firmly secured until the corresponding tips 146 of rods 46 bear against discs 47 of the vehicle's braking unit, passing between the spokes of rim 7.

Once the support has been stabilised, the measuring and centering tools for the vehicle's trim can be fitted to flange 3 and have the outer surface of the said brake discs, whose locations are substantially constant and certain, as a reference, eliminating any possible error due to imperfections in the support of flange 3 from the measurement readings.

In order to remove unit 1 from corresponding wheels 2 of vehicles it is sufficient to unscrew bolts 36 and 168 respectively. Springs 23 and 32 in the first version and 160 and 167 in the second version relax allowing balls 28 to withdraw and half-shells 163 to move together respectively, with the consequent possibility of sliding units 1 from the central holes 6 of wheels 2.

It has been established in practice that the invention described achieves the objective stated, in particular

## Claims

1. Quick-fit unit for mounting on a wheel measuring and centring jigs for vehicle wheels trim, comprising:
- at least one flange (3) provided with means for the attachment and support of jigs;
- a central member (4) integral with the said flange (3) having a longitudinal axis (A) substantially perpendicular thereto, said central member (4), comprising :
- expansion means (5) associated with the said central member (4);
- a control member (9) for controlling said expansion means (5);
- support and reference means (10) suitable for supporting and referring said flange (3) in respect of the wheel (2),
**characterised in that** said central member (4) is insertable into a central hole (6) of a rim (7) of a vehicle wheel (2) and expandable therein, so as to couple and secure said flange (3) to said central hole (6) of a wheel (2).

2. Unit according to Claim 1, **characterised in that** the said central member (4) comprises a first outer cylindrical body (11) substantially shaped as a sleeve and capable of being secured to the said flange (3) with corresponding securing means (12), and a second inner substantially cylindrical body (13) mounted so as to move internally within the said first sleeve body (11) in an axial cavity (111) therein.

3. Unit according to Claim 2, **characterised in that** the said second inner body (13) has at one end facing the wheel (2) a peripheral surface (14) bearing against the peripheral edge of the central hole (6) of the wheel (2) and a seat (15) housing the said expansion means (5), and at the opposite end a hollow seat (16) for movably housing the said control member (9).

4. Unit according to Claim 3, **characterised in that** between the said first outer body (11) and the said inner body (13) there are guide means (17) to guide mutual movement comprising at least one through key (18) which can be screwed into a corresponding threaded hole (19) provided in the said first outer cylindrical body (11) and having one end (118) which can be movably engaged in a corresponding longitudinal groove (20) made in the outer surface of the said second inner body (13).

5. Quick-fit unit (1) according to Claims 1 to 3, **characterised in that** between the said first outer cylindrical body (11) and the said second inner body (13) there are opposing elastic means (21) comprising at least one helicoidal compression spring (23) housed in a hollow seat (22) provided in the said first outer body (11) and a coaxial guide pin (24) movably inserted within the said hollow seat (22) and located between the said helicoidal spring (23) and a supporting stop (25) provided in the said second inner body (13).

6. Quick-fit unit (1) according to Claims 1 to 3, **characterised in that** the said seat (15) housing the said expansion means (5) comprises a cup-shaped member (26) which extends from the corresponding end of the said second inner body (13) coaxially therewith.

7. Quick-fit unit according to Claims 1 to 6, **characterised in that** the said expansion means (5) comprise an expander member (27) mounted so as to move in the said cup-shaped member (26) and secured to the said control member (9) and a plurality of balls (28) held between the outer surface of the said expander member (27) and the inner walls of the said cup-shaped member (26) and partly projecting from a plurality of through holes (29) made circularly in the said walls of the said cup-shaped member (26).

8. Quick-fit unit according to Claim 7, **characterised in that** the said through holes (29) have dimensions which are slightly less than the dimensions of the said balls (28) in order to allow them to pass partly beyond the outer surface of the said cup-shaped member (26).

9. Quick-fit unit according to Claim 8, **characterised in that** the said through holes (29) are aligned with a first plane (30) substantially perpendicular to the said longitudinal axis (A) and parallel to a second plane (30') in which the said peripheral bearing surface (14) for the edge of the said central hole (6) of the wheel (2) lies, the said first (30) and the said second (30') plane being located at a distance which can be adjusted by means of the said control member (9).

10. Quick-fit unit according to Claims from 6 to 9, **characterised in that** between the said expander member (27) and the bottom of the said cup-shaped member (26) there are opposing elastic means (31) comprising at least one helicoidal spring (32).

11. Quick-fit unit according to Claim 8, **characterised in that** the outer surface of the said expander member (27) has a series of radial grooves (33) guiding the movement of the said plurality of balls (28).

12. Quick-fit unit according to Claims 1, 2, 3 and 8, **characterised in that** the said control member (9) comprises a rod (34) inserted to move coaxially within the said hollow seat (16) of the said substantially cylindrical second inner body (13), a threaded cavity (35) provided coaxially in the said rod (34) at the end of the same facing away from the opposite part with respect to a wheel (2), a threaded bolt (36) which can be engaged in the said threaded cavity (35) and whose head (136) is outside the same for engagement by control tools in two-directional rotation.

13. Quick-fit unit according to Claim 12, **characterised in that** the said control member (9) also comprises a cap (38) to close off the end of the said axial cavity (111), the said cap (38) being passed through by a cavity (39) for passage of the said head (136) of the said bolt (36).

14. Quick-fit unit according to Claim 13, **characterised in that** means are provided for immobilising (40) the said cap (38) at the corresponding end of the said axial cavity (111), the said immobilising means (40) comprising at least one threaded pin (41) which can be screwed into a matchingly threaded hole (42) made transversely in the said first outer body (11) and having one end (141) capable of engagement in a corresponding groove (142) provided peripherally in the said cap (38).

15. Quick-fit unit according to Claim 12, **characterised in that** the said means (39) for securing the said rod (34) to the said expander member (27) comprise a through hole (43) provided axially in the said expander member (27), a threaded shank (44) of the said rod (34) inserted into the said through hole (43), and at least one nut (45) which can be screwed onto the said threaded shank (44) to tighten the said expander member (27).

16. Quick-fit unit according to Claim 1, **characterised in that** the said supporting and reference means (10) for the said flange (3) on a wheel (2) comprise a plurality of integral rods (46) extending perpendicular to the said flange (3) towards the wheel (2), the said rods (46) having corresponding coplanar tips (146) which can bear through their corresponding coplanar tips (146) against the disc of the brake unit of the wheel (2) with the said central member (4) connected to the central hole (6) of the wheel (2).

17. Quick-fit unit according to Claim 1, **characterised in that** the said central member (4) comprises a first outer body (211) substantially in the form of a sleeve and capable of being secured to the said flange (3), a second inner substantially cup-shaped body (113) mounted so as to move within the said first body (211), the said second inner body (113) having a seat (152) to house the said expansion means (5) and having a central opening (153) in the bottom for passage of the said control member (9).

18. Quick-fit unit according to Claim 17 **characterised in that** between the said first outer cylindrical body (211) and the second inner cup-shaped body (113) there are means (154) to guide mutual movement and opposing elastic means (158).

19. Quick-fit unit according to Claim 18 **characterised in that** the said guide means (154) comprise at least one through key (155) which can be screwed into a corresponding threaded hole (156) provided transversely in the said first outer cylindrical body (211) and having one end which can engage movably in a corresponding longitudinal groove (157) provided in the outer surface of the said second inner body (113).

20. Quick-fit unit according to Claims 16 and 17, **characterised in that** the said opposing elastic means (158) comprise at least one helicoidal spring (160) housed in a hollow seat (159) provided in the said first outer cylindrical body (211), the said spring bearing against a peripheral shoulder (161) provided on the outer surface of the said second inner body (113).

21. Quick-fit unit according to Claims 16 to 20, **characterised in that** the said expansion means (5) comprise an expander member (162) mounted so as to move within the said second inner body (113), at least one pair of facing half-shells (163) which can be moved apart from each other through the effect of progressively inserting the said expander member (162) against the force of the opposing elastic means (164), and a peripheral edge (165) capable of connecting to the inner edge (166) of the central hole (6) of the wheel (2).

22. Quick-fit unit according to Claim 21, **characterised in that** the said opposing elastic means (164) comprise a series of annular members (172) fitted peripherally on the said half-shells (163) in corresponding annular grooves provided thereon.

## Patentansprüche

1. Schnellmontageeinheit, mittels derer an einem Fahrzeugrad Mess- und Zentriereinrichtungen für die Radeinstellung befestigbar sind, mit
- mindestens einem Flansch (3), der mit Mitteln zur Befestigung und Abstützung der ansetzbaren Einrichtungen versehen ist,
- einem mit dem Flansch verbundenen Zentralorgan (4), das eine im wesentlichen senkrecht zu dem Flansch (3) verlaufende Längsachse (A) hat,
- einer dem Zentralorgan (4) zugeordneten Aufweitungseinrichtung (5),
- einem Stellglied (9) zur Betätigung der Aufweitungseinrichtung sowie
- einer Stütz- und Positioniereinrichtung, die zur Abstützung und lagerichtigen Anordnung des Flansches (3) bezüglich des Fahrzeugrades (2) geeignet ist,
**dadurch gekennzeichnet, dass** das Zentralorgan (4) in ein zentrales Loch (6) der Felge (7) des Rades (2) einführbar und in demselben derart aufweitbar ist, dass der Flansch (3) in dem zentralen Loch (6) des Rades (2) angekoppelt und fixiert ist.

2. Einheit nach Anspruch 1, **dadurch gekennzeichnet, dass** das Zentralorgan (4) einen äußeren, ersten zylindrischen Körper (11) umfasst, der im wesentlichen in der Art einer Muffe ausgebildet ist und mit entsprechenden Befestigungsmitteln (12) an dem Flansch (3) befestigbar ist, und einen zweiten, inneren, im wesentlichen zylindrischen Körper (13) umfasst, welcher derart angeordnet ist, dass er intern innerhalb des ersten Muffenkörpers (11) in einem in diesem angeordneten axialen Hohlraum (111) bewegbar ist.

3. Einheit nach Anspruch 2, **dadurch gekennzeichnet, dass** der zweite innere Körper (13) an einem dem Rad zugewandten Ende eine Umfangsfläche (14) hat, die an einem Umfangsrand des zentralen Loches (8) des Rades (2) anliegt, sowie einen Aufnahmeraum (15), der die genannte Aufweitungseinrichtung (5) aufnimmt, und am gegenüberliegenden Ende einen Aufnahme-Hohlraum (16) hat, in dem das Betätigungselement (9) beweglich aufgenommen ist.

4. Einheit nach Anspruch 3, **dadurch gekennzeichnet, dass** zwischen dem genannten ersten äußeren Körper (11) und dem genannten inneren Körper (13) eine Führungseinrichtung (17) vorgesehen ist, die eine Führung wechselseitiger Bewegungen vermittelt und mindestens ein durchgehendes Schlosselement (18) umfasst, das in eine entsprechende, an dem genannten, ersten, äußeren zylindrischen Körper (11) > vorgesehene Gewindebohrung (19) einschraubbar ist, und einen Endabschnitt (118) hat, der in beweglichen Eingriff mit einer entsprechenden Längsrille (20) bringbar ist, die an der Außenfläche des genannten zweiten, inneren Ringkörpers (13) angeordnet ist.

5. Montageeinheit nach den Ansprüchen 1 bis 3, **dadurch gekennzeichnet, dass** zwischen dem genannten ersten, äußeren, zylindrischen Körper (11) und dem zweiten, inneren Körper (13) elastische Rückstellelemente (21) vorgesehen sind, die mindestens eine Druck-Schraubenfeder (27) umfassen, die in einem Aufnahmehohlraum (22) angeordnet ist, der an dem ersten, äußeren Körper (11) vorgesehen ist, sowie einen koaxialen Führungszapfen (24) hat, der beweglich in den Aufnahmehohlraum (22) eingesetzt und zwischen der Schraubenfeder (23) und einem Stützanschlag (25) angeordnet ist, der in dem genannten zweiten, inneren Körper (13) vorgesehen ist.

6. Schnellmontageeinheit (1) gemäß den Ansprüchen 1 bis 3 **dadurch gekennzeichnet, dass** der die Aufweitungseinrichtung (5) enthaltende Aufnahmeraum (15) ein becherförmiges Teil (26) umfasst, das in koaxialer Anordnung mit dem inneren Körper (13), von dem entsprechenden Ende desselben, ausgeht.

7. Schnellmontageeinheit (1) gemäß den Ansprüchen 1 bis 6 **dadurch gekennzeichnet, dass** die genannte Aufweitungseinrichtung (5) ein Spreizglied (27) umfasst, das derart montiert ist, dass es in dem becherförmigen Teil (26) beweglich ist und fest mit dem Betätigungsglied (9) verbunden ist, sowie einen Satz von Kugeln (28) umfasst, die zwischen der Außenfläche des genannten Spreizgliedes (27) und den Innenwänden des genannten becherförmigen Teils (26) gehalten sind und teilweise aus einer Gruppe von durchgehenden Löchern (29) herausragen, die in kreisförmiger Anordnung an den seitlichen Wandungen des becherförmigen Teils (26) vorgesehen sind.

8. Schnellmontageeinheit nach Anspruch 7, **dadurch gekennzeichnet, dass** die genannten durchgehenden Löcher (29) Abmessungen haben, die geringfügig kleiner sind als die Abmessungen der genannten Kugeln (28) derart, dass diese über die Außenfläche des becherförmigen Teils (26) etwas hinausragen können.

9. Schnellmontageeinheit nach Anspruch 8, **dadurch gekennzeichnet, dass** die genannten durchgehenden Löcher (29) längs einer ersten Ebene (30) angeordnet sind, die im wesentlichen rechtwinklig zu der genannten Längsachse (A) und parallel zu einer zweiten Ebene (30') verläuft, in der die genannte periphere Umfangsanlagefläche (14) für den Rand des genannten zentralen Loches (6) des Rades (2) liegt, wobei die genannte erste Ebene (30) und die genannte zweite Ebene (30') in einem Abstand von einander angeordnet sind, der mittels des Betätigungselements (9) einstellbar ist.

10. Schnellmontageeinheit gemäß den Ansprüchen 6 bis 9, **dadurch gekennzeichnet, dass** zwischen dem Aufweitungsglied (27) und dem Boden des becherförmigen Teils (26) elastische Rückstellmittel (31), die mindestens eine Schraubenfeder (32) umfassen angeordnet sind.

11. Schnellmontageeinheit nach Anspruch 8, **dadurch gekennzeichnet dass** die Außenseite des genannten Spreizgliedes (27) eine Anzahl von Rillen (33) hat, welche die Bewegungsführung des vorgenannten Satzes von Kugeln (28) vermitteln.

12. Schnellmontageeinheit gemäß den Ansprüchen 1, 2, 3 und 8, **dadurch gekennzeichnet, dass** das Betätigungselement (9) einen Stab (3A.) umfasst, der in den Aufnahmehohlraum (16) des genannten im wesentlichen zylindrischen zweiten inneren Körpers (13) koaxial beweglich eingesetzt ist, weiter in dem Stab (34) eine koaxiale Gewindebohrung (35) vorgesehen ist, die an demjenigen Stabende angeordnet ist, das von dem dem Rad (2) gegenüberliegenden Teil wegweisend angeordnet ist, und ein mit der Gewindebohrung (35) in Eingriff bringbarer Gewindebolzen (36) vorgesehen ist, dessen Kopf (136) für den Eingriff mit in alternativen Richtungen drehbaren Betätigungswerkzeugen außerhalb der Gewindebohrung (35) angeordnet ist.

13. Schnellmontageeinheit nach den Anspruch 12, **dadurch gekennzeichnet, dass** das genannte Betätigungselement (9) auch eine Kappe (38) zum Verschluss des Endes des genannten axialen Hohlraumes (111) umfasst, wobei diese Kappe (38) von einer Aushöhlung (39) durchsetzt ist, die dem Durchtritt des genannten Kopfes (136) des genannten Bolzens (36) dient.

14. Schnellmontageeinheit nach den Anspruch 13, **dadurch gekennzeichnet, dass** eine Einrichtung (40) zur Festsetzung der genannten Abschlusskappe (38) an dem entsprechenden Ende des genannten A-xialhohlraumes (111) vorgesehen ist, wobei diese Festsetzungseinrichtung mindestens einen Gewindestift (41) umfasst, der in eine mit einem passenden Gewinde versehen Bohrung eingeschraubt werden kann, die mit transversalem Verlauf die in den ersten, äußeren Körper (11) eingebracht ist, und wobei der Gewindestift einen Endabschnitt (141) hat, der in Eingriff einer entsprechenden Rille (142) bringbar ist, die am äußeren Umfang der Abschlusskappe (38) vorgesehen ist.

15. Schnellmontageeinheit nach den Anspruch 12, **dadurch gekennzeichnet, dass** die Einrichtung zur Befestigung des genannten Stabes (34) an dem Spreizglied (27) eine durchgehende Öffnung (43) umfasst, die in dem genannten Spreizglied (27) axial verläuft, weiter ein mit einem Gewinde versehener Schaft (44) des in die Durchgangsbohrung (43) eingeführten Stabes vorgesehen ist sowie mindestens eine Mutter (45), die zum Anziehen des Spreizelements (27) auf den Gewindeschaft (44) aufschraubbar ist.

16. Schnellmontageeinheit nach den Anspruch 1, **dadurch gekennzeichnet, dass** die genannte Trag- und Zentriereinrichtung (10) für den genannten Flansch (3) an einem Rad (2) einen Satz flanschfester Stäbe (46) umfasst, die sich rechtwinklig zu dem genannten Flansch (3) auf das Rad hinzu erstrecken, wobei diese Stäbe entsprechende koplanare Stützenden (146) haben, die mit diesen koplanaren Stützenden (146) an die Bremsscheibe der Bremseinheit des Rades andrückbar sind, wobei das Zentralorgan (4) in dem zentralen Loch (6) des Rades (2) mit diesem verbunden ist.

17. Schnellmontageeinheit nach den Anspruch 1, **dadurch gekennzeichnet, dass** das Zentralorgan einen ersten äußeren Körper (211) umfasst, der im wesentlichen die Form einer Muffe hat und an dem Flansch (3) festlegbar ist, sowie einen zweiten inneren, im wesentlichen becherförmigen Körper (113) der beweglich innerhalb des ersten Köpers (211) montiert ist, wobei der zweite innere Körper (113) einen Raum (152) zur Aufnahme der Aufweitungseinrichtung (5) hat sowie eine zentrale Öffnung (153) an dessen Boden vorgesehen ist, durch die das Betätigungselement (9) hindurch tritt.

18. Schnellmontageeinheit nach Anspruch 17, **dadurch gekennzeichnet, dass** zwischen dem genannten ersten, äußeren, zylindrischen Körper (211) und dem zweiten, inneren, becherförmigen Körper (113) eine Einrichtung (154) zur Führung wechselseitiger Bewegungen sowie eine elastische Rückstelleinrichtung (158) vorgesehen sind.

19. Schnellmontageeinheit nach den Anspruch 18, **dadurch gekennzeichnet, dass** die genannte Führungseinrichtung (154) mindestens ein durchgehendes Schlüsselteil (155) umfasst, das in eine entsprechende Gewindebohrung (158) einschraubbar ist, die mit transversalem Verlauf an dem ersten äußeren zylindrischen Körper (211) vorgesehen ist und an einem Ende beweglich in Eingriff mit einer entsprechenden Längsrille (157) gelangen kann, die an der Außenfläche des genannten zweiten inneren Körpers (113) vorgesehen ist.

20. Schnellmontageeinheit gemäß den Ansprüchen 16 und 17, **dadurch gekennzeichnet, dass** die elastische Rückstelleinrichtung (158) mindestens eine Schraubenfeder (160) umfasst, die in einem Aufnahmehohlraum (159) angeordnet ist, der an dem genannten, ersten, äußeren zylindrischen Körper (211) vorgesehen ist, wobei die genannte Feder sich an einer Umfangsschulter (161) abstützt, die an der Außenseite des genannten zweiten, inneren Körpers (113) vorgesehen ist.

21. Schnellmontageeinheit nach den Ansprüchen 16 bis 20 , **dadurch gekennzeichnet, dass** die genannte Aufweitungseinrichtung (5) ein Spreizglied (162) umfasst, das innerhalb des genannten zweiten, inneren Körpers (113) bewegbar montiert ist, dass mindestens ein Paar von einander gegenüberliegenden Halbschalen (163) vorgesehen ist, die durch den Effekt zunehmenden Einführens des Spreizgliedes (162) gegen die Wirkung der elastischen Rückstelleinrichtung (164) voneinander wegbewegbar sind, und dass ein Umfangsrandbereich (165) vorgesehen ist, der in Anlage mit dem inneren Rand (166) des zentralen Loches (6) des Rades (2) bringbar ist.

22. Schnellmontageeinheit nach den Anspruch 21, **dadurch gekennzeichnet, dass** die genannte elastische Rückstelleinrichtung (164) eine Reihe von ringförmigen Elementen (172) umfasst, die am Umfangsbereich der Halbschalen (163) in entsprechenden Ringrillen derselben festgelegt sind.

## Revendications

1. Unité à fixation rapide, pour le montage sur une roue de gabarits de mesure et de centrage pour l'équilibrage des roues d'un véhicule, comprenant :
- au moins une bride (3) munie de moyens pour la fixation et le support des gabarits ;
- un élément central (4) solidaire de ladite bride (3) ayant un axe longitudinal (A) essentiellement perpendiculaire à celle-ci, ledit élément central (4) comprenant :
- des moyens d'expansion (5) associés audit élément central (4) ;
- un élément de contrôle (9) pour contrôler lesdits moyens d'expansion (5) ;
- des moyens de support et de repère (10) aptes à supporter et servir de repère à ladite bride (3) par rapport à la roue (2),
***caractérisée en ce que*** ledit élément central (4) est insérable dans une ouverture centrale (6) d'une jante (7) d'une roue (2) d'un véhicule et extensible dans celle-ci, de manière à coupler et assujettir ladite bride (3) à ladite ouverture centrale (6) d'une roue (2).

2. Unité selon la revendication 1, ***caractérisée en ce que*** ledit élément central (4) comprend un premier corps extérieur cylindrique (11) essentiellement conformé en manchon et apte à être fixé à ladite bride (3) avec des moyens de fixation correspondants (12), et un deuxième corps intérieur essentiellement cylindrique (13) monté de manière à se mouvoir intérieurement dans ledit premier corps formant manchon (11) dans une cavité axiale (111) de celui-ci.

3. Unité selon la revendication 2, ***caractérisée en ce que*** ledit deuxième corps intérieur (13) possède, sur une extrémité faisant face à la roue (2), une surface périphérique (14) s'appuyant contre le rebord périphérique de l'ouverture centrale (6) de la roue (2) et un siège (15) abritant lesdits moyens d'expansion (5), et sur son extrémité opposée, un siège creux (16) destiné à recevoir de manière mobile ledit élément de contrôle (9).

4. Unité selon la revendication 3, ***caractérisée en ce que**,* entre ledit premier corps extérieur (11) et ledit corps intérieur (13), se trouvent des moyens de guidage (17) pour guider leur déplacement mutuel, comprenant au moins une clé traversante (18) qui peut être vissée dans un trou fileté correspondant (19) ménagé dans ledit premier corps extérieur cylindrique (11) et ayant une extrémité (118) qui peut être engagée de manière mobile dans une rainure longitudinale correspondante (20) ménagée dans la surface extérieure dudit deuxième corps intérieur (13).

5. Unité à fixation rapide (1) selon les revendications 1 à 3, ***caractérisée en ce que**,* entre ledit premier corps extérieur cylindrique (11) et ledit deuxième corps intérieur (13), se trouvent des moyens élastiques antagonistes (21) comprenant au moins un ressort de compression hélicoïdal (23) logé dans un siège creux (22) ménagé dans ledit premier corps extérieur (11) et une goupille de guidage coaxiale (24) insérée de manière mobile dans ledit siège creux (22) et située entre ledit ressort hélicoïdal (23) et une butée de support (25) ménagée dans ledit deuxième corps intérieur (13).

6. Unité à fixation rapide (1) selon les revendications 1 à 3, ***caractérisée en ce que*** ledit siège (15) abritant lesdits moyens d'expansion (5) comprend un élément en forme de coupelle (26) qui part de l'extrémité correspondante dudit deuxième corps intérieur (13), coaxialement à celui-ci.

7. Unité à fixation rapide selon les revendications 1 à 6, ***caractérisée en ce que*** lesdits moyens d'expansion (5) comprenant un élément expanseur (27) monté de façon à se mouvoir dans ledit élément en forme de coupelle (26) et fixé audit élément de contrôle (9), et une pluralité de billes (28) retenues entre la surface extérieure dudit élément expanseur (27) et les parois intérieures dudit élément en forme de coupelle (26) et saillant partiellement d'une pluralité de trous traversants (29) ménagés circulairement dans lesdites parois dudit élément en forme de coupelle (26).

8. Unité à fixation rapide selon la revendication 7, ***caractérisée en ce que*** lesdits trous traversants (29) ont des dimensions légèrement inférieures aux dimensions desdites billes (28) de manière à leur permettre de dépasser partiellement de la surface extérieure dudit élément en forme de coupelle (26).

9. Unité à fixation rapide selon la revendication 8, ***caractérisée en ce que*** lesdits trous traversants (29) sont alignés avec un premier plan (30) sensiblement perpendiculaire audit axe longitudinal (A) et parallèle à un deuxième plan (30') dans lequel se trouve ladite surface périphérique de support (14) pour le rebord de ladite ouverture centrale (6) de la roue (2), ledit premier (30) et ledit deuxième (30') plans étant séparés d'une distance qui peut être ajustée au moyen dudit élément de contrôle (9).

10. Unité à fixation rapide selon les revendications 6 à 9, ***caractérisée en ce que**,* entre ledit élément expanseur (27) et le fond dudit élément en forme de coupelle (26) se trouvent des moyens élastiques antagonistes (31) comprenant au moins un ressort hélicoïdal (32).

11. Unité à fixation rapide selon la revendication 8, ***caractérisée en ce que*** la surface extérieure dudit élément expanseur (27) présente une série de rainures radiales (33) guidant le déplacement de ladite pluralité de billes (28).

12. Unité à fixation rapide selon les revendications 1, 2, 3 et 8, ***caractérisé en ce que*** ledit élément de contrôle (9) comprend une tige (34) insérée de manière à se déplacer coaxialement dans ledit siège creux (16) dudit deuxième corps intérieur essentiellement cylindrique (13), une cavité filetée (35) ménagée coaxialement dans ladite tige (34) à l'extrémité de celle-ci située à l'opposé de la partie en vis-à-vis d'une roue (2), un boulon fileté (36) qui peut être engagé dans ladite cavité filetée (35) et dont la tête (136) est à l'extérieur de celle-ci pour une prise par des outils de commande avec une rotation bi-directionnelle.

13. Unité à fixation rapide selon la revendication 12, ***caractérisée en ce que*** ledit élément de contrôle (9) comprend aussi un capuchon (38) pour fermer l'extrémité de ladite cavité axiale (111), ledit capuchon (38) étant traversé par une cavité (39) destinée au passage de ladite tête (136) dudit boulon (36).

14. Unité à fixation rapide selon la revendication 13, ***caractérisée en ce que*** des moyens (40) sont prévus pour immobiliser ledit capuchon (38) à l'extrémité correspondante de ladite cavité axiale (111), lesdits moyens d'immobilisation (40) comprenant au moins une broche filetée (41) qui peut être vissée dans un trou fileté de manière complémentaire (42) pratiqué transversalement dans ledit premier corps extérieur (11) et ayant une extrémité (141) apte à un engagement dans une rainure correspondante (142) ménagée de manière périphérique dans ledit capuchon (38).

15. Unité à fixation rapide selon la revendication 12, ***caractérisée en ce que*** lesdits moyens (39) pour fixer ladite tige (34) audit élément expanseur (27) comprennent un trou traversant (43) ménagé axialement dans ledit élément expanseur (27), une queue filetée (44) de ladite tige (34) insérée dans ledit trou traversant (43), et au moins un écrou (45) qui peut être vissé sur ladite queue filetée (44) pour serrer ledit élément expanseur (27).

16. Unité à fixation rapide selon la revendication 1, ***caractérisée en ce que*** lesdits moyens de support et de repère (10) pour ladite bride (3) sur une roue (2) comprennent une pluralité de tiges intégrées (46) s'étendant perpendiculairement à ladite bride (3) en direction de la roue (2), lesdites tiges (46) ayant des pointes coplanaires correspondantes (146) qui peuvent s'appuyer par l'intermédiaire de leurs pointes coplanaires correspondantes (146) contre le disque de l'unité de frein de la roue (2) avec ledit élément central (4) relié à l'ouverture centrale (6) de la roue (2).

17. Unité à fixation rapide selon la revendication 1, ***caractérisée en ce que*** ledit élément central (4) comprend un premier corps extérieur (211) essentiellement conformé en manchon et apte à être fixé à ladite bride (3), un deuxième corps intérieur essentiellement en forme de coupelle (113) monté de manière à se mouvoir dans ledit premier corps (211), ledit deuxième corps intérieur (113) ayant un siège (152) destiné à abriter lesdits moyens d'expansion (5) et ayant une ouverture centrale (153) dans le fond pour le passage dudit élément de contrôle (9).

18. Unité à fixation rapide selon la revendication 17, ***caractérisée en ce que,*** entre ledit premier corps extérieur cylindrique (211) et le deuxième corps intérieur en forme de coupelle (113) se trouvent des moyens (154) pour guider leur déplacement mutuel et des moyens élastiques antagonistes (158).

19. Unité à fixation rapide selon la revendication 18, ***caractérisée en ce que*** lesdits moyens de guidage (154) comprennent au moins une clé traversante (155) qui peut être vissée dans un trou fileté correspondant (156) ménagé transversalement dans ledit premier corps extérieur cylindrique (211) et ayant une extrémité qui peut s'engager de manière mobile dans une rainure longitudinale correspondante (157) ménagée dans la surface extérieure dudit deuxième corps intérieur (113).

20. Unité à fixation rapide selon les revendications 16 et 17, ***caractérisée en ce que*** lesdits moyens élastiques antagonistes (158) comprennent au moins un ressort hélicoïdal (160) reçu dans un siège creux (159) ménagé dans ledit premier corps extérieur cylindrique (211), ledit ressort appuyant contre un épaulement périphérique (161) ménagé sur la surface extérieure dudit deuxième corps intérieur (113).

21. Unité à fixation rapide selon les revendications 16 à 20, ***caractérisée en ce que*** lesdits moyens d'expansion (5) comprennent un élément expanseur (162) monté de façon à se mouvoir dans ledit deuxième corps intérieur (113), au moins une paire de demi-coques (163) en vis-à-vis qui peuvent s'écarter l'une de l'autre sous l'effet de l'insertion progressive dudit élément expanseur (162) en opposition à la force des moyens élastiques antagonistes (164), et un rebord périphérique (165) apte à une connexion avec le rebord intérieur (166) de l'orifice central (6) de la roue (2).

22. Unité à fixation rapide selon la revendication 21, ***caractérisée en ce que*** lesdits moyens élastiques antagonistes (164) comprennent une série d'éléments annulaires (172) fixés de manière périphérique sur lesdites demi-coques (163) dans des rainures annulaires correspondantes prévues sur celles-ci.
